# EUROPEAN PATENT SPECIFICATION

(11) **EP 0 272 762 B1**
(45) Date of publication and mention of the grant of the patent: **01.06.1994**
(21) Application number: 87202590.3
(22) Date of filing: 21.12.1987
(51) Int. Cl.: H04N 1/41, H04N 1/46, H04N 1/21

(54) **Method and system for image coding and display**
Verfahren und System zur Bildkodierung und -anzeige
Méthode et système de codage et de visualisation d'images

(30) Priority: 24.12.1986 GB 8630887
(43) Date of publication of application: 29.06.1988
(73) Proprietor: PHILIPS ELECTRONICS UK LIMITED, Croydon CR9 3QR (GB); Philips Electronics N.V., 5621 BA Eindhoven (NL)
(72) Inventor: Richards, Norman Dennis, Redhill Surrey RH1 5HA (GB)
(74) Representative: White, Andrew Gordon

(56) References cited:
- EP-A- 0 152 355
- EP-A- 0 241 989
- FR-A- 2 559 979
- GB-A- 2 026 811
- GB-A- 2 164 817
- US-A- 4 597 005
- IEEE TRANSACTIONS ON COMMUNICATIONS, vol. COM-31, no. 4, April 1983, pages 532-540, IEEE, New York, US; P.J. BURT et al.: "The laplacian pyramid as a compact image code"
- NHK LABORATORIES NOTE, no. 328, February 1986, pages 1,3-12, NHK, Tokyo, JP; S. INOUE et al.: "Image filing system capable of quick retrieval"
- IEEE TRANSACTIONS ON COMMUNICATIONS, vol. COM-34, no. 8, August 1986, pages 806-813, IEEE, New York, US; W.D. HOFMANN et al.: "Making progressive transmission adaptive"

## Description

This invention relates to image display and more particularly to a method of image coding by which pixel information for an image is coded into digital data which can be recorded on a suitable storage medium. The invention further relates to an arrangement for carrying out such a coding method and to data display apparatus for utilising the coded digital data.

In a typical electronic image display apparatus, an image which is displayed on the screen of a CRT (cathode ray tube) or other display device is composed of discrete pixels each of which is represented by a respective digital code which defines a pixel in terms of chrominance and luminance pixel component values. Each of these digital codes is stored in a display memory which is addressed periodically in synchronism with the operation of the display device to read out the digital codes which are used to produce video signals for driving the display device. The display produced by electronic image display apparatus of the above type is termed a bit-map display and has, for example, a resolution of 360 x 280 pixels. The apparatus can include a background memory in which is stored the pixel information for a large number of images. When a displayed image is to be replaced by a new image, the pixel information for the new image is made available in the display memory as the respective digital codes which represent the pixel component values for the new image. The pixel information can be stored in the background memory as the actual respective digital codes which represent the pixel component values, so that the digital codes for the new image can be read out from the background memory and written directly into the display memory in place of the digital codes for the previously displayed image.

The time taken for this read/write operation in respect of the digital codes for the new image depends inter alia upon the operating speed (i.e. the speed of data access) of the background memory. When the background memory is a mass memory, such as an optical record carrier (i.e. a compact disc) in its role as a read only memory (CD ROM), its operating speed may be too low for certain applications. In particular, it has been determined empirically that a user of image display apparatus of the above type will tolerate a delay of only about one second for replacing a displayed image by a new image. If the delay is significantly longer, then use of the apparatus becomes aesthetically unacceptable. As a consequence, the amount of pixel information that can be transferred from the background memory to the display memory to change the image being displayed becomes limited.

It has been found that such a limitation poses a problem in respect of enhanced resolution displays which require a large amount of pixel information. A CD ROM can readily provide the storage capacity which is necessary, but accessing this pixel information sufficiently quickly has proven to be difficult. As an example, for a normal resolution image display using a 360 x 280 pixel matrix, as aforesaid, the time taken to load digital codes representing pixel component values from a CD ROM into a display memory is thought to be on the margin of user acceptability. However, for an enhanced resolution image display using a 720 x 560 pixel matrix, (i.e. having a quadruple number of pixels), which is contemplated, the loading of digital codes representing pixel component values will take four times longer, which is unacceptable.

In order to provide a more efficient form of coding for at least one pixel component value of a plurality of pixels to reduce the amount of digital data that is required to be stored to provide enhanced resolution image displays, Applicants prior British Patent Application 8609078 (now published as EP 0241989) describes a method of image coding which comprises the steps of:-
(a) obtaining pixel information as a first matrix of m x n pixel component values, where m and n are integers,
(b) low-pass filtering these pixel component values of the first matrix to produce a second matrix of m x n pixel component values which are in respect of a lower resolution image compared with the pixel component values of the first matrix,
(c) subtracting the second matrix from the first matrix pixel-by-pixel to produce a third matrix of m x n difference values, which have reduced pixel-to-pixel correlation compared with the pixel component values of the first matrix,
(d) coding said third matrix of difference values into a first set of digital data for storage on a storage medium,
(e) sub-sampling said second matrix of pixel component values to produce a fourth matrix of m/a x n/b pixel component values of reduced density, where a and b are factors of m and n, respectively, and
(f) coding said fourth matrix of pixel component values into a second set of digital data for storage on a storage medium.

A complementary method of decoding the digital data obtained by the above coding method, to restitute the original pixel information, is also described in the aforementioned patent application and comprises the steps of:-
(g) decoding the first set of digital data representing the difference values to reconstitute the third matrix of difference values,
(h) decoding the second set of digital data representing the pixel component values of reduced density to reconstitute the fourth matrix of pixel component values,
(i) interpolation filtering said fourth matrix of pixel component values to restitute said second matrix of pixel component values, and
(j) adding pixel-by-pixel the reconstituted third matrix and the restituted second matrix to restitute said first matrix, the pixel component values of which represent the original pixel information.

Therefore, in summary, Applicants aforementioned patent application describes a method whereby a high resolution image is coded as a lower resolution image of reduced pixel density. Additional coding produces extra data representative of the difference between the high resolution image and the lower resolution image before pixel reduction. On decoding, this extra data is subsequently combined with data representing the restituted lower resolution image so as to restore for display an image which approximates to the original high resolution image.

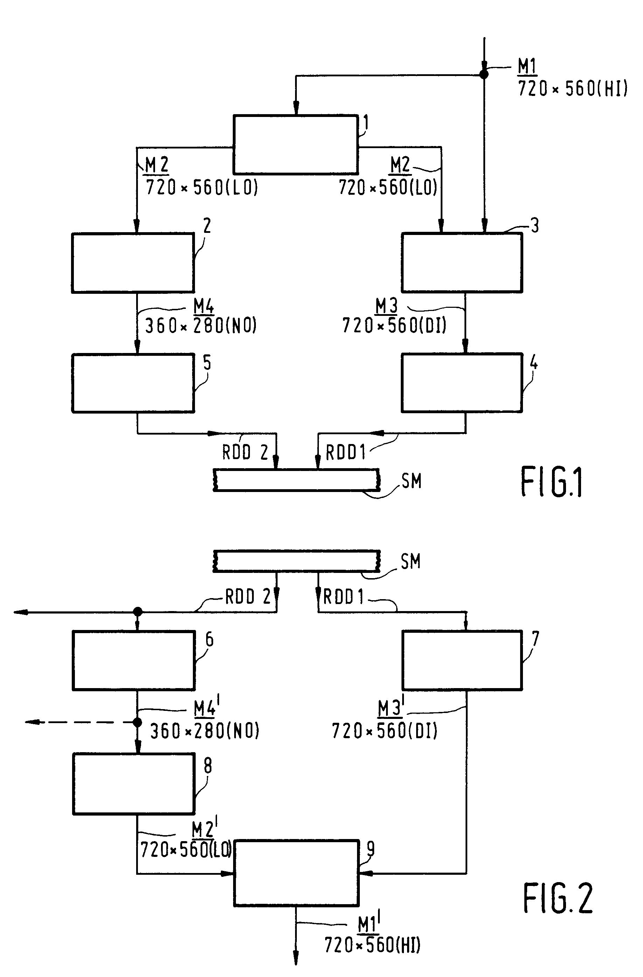

Figures 1 and 2 of the accompanying drawings are representative diagrams of these prior coding and decoding methods, respectively. A similar technique is described by Seiki Inoue and Kenji Kira in "Image Filing System Capable of Quick Retrieval", NHK Laboratories Note No. 328 (NHK, Tokyo, February 1986).

From IEEE transactions on Communications, vol. COM-31, n° 4, April 1983, pages 532-540, New York, US; P.J. Burt et al. : "The Laplacian Pyramid as a compact image code" , it is known to code pixel matrix data by low-pass filtering the pixel values to get a new matrix of a lower resolution image, which is then sub-sampled and encoded.

The representative diagram in Figure 1 of the coding method shows a low-pass filtering step 1, a sub-sampling step 2, a difference step 3, a first coding step 4 and a second coding step 5. Pixel information for at least one component value of a plurality of pixels representing an image is applied to the low-pass filtering step 1 and also to the difference step 3. This pixel information is assumed by way of illustrative example to comprise a first matrix M1 of 720 x 560 pixel component values (HI). This pixel information is in respect of an enhanced resolution display which would be better than both standard 625 line camera resolution and studio quality and would require a high definition television screen for displaying the image concerned at full resolution.

The low-pass filtering step 1 effects low pass filtering to produce a second matrix M2 of 720 x 560 pixel component values (LO) which are in respect of a lower resolution image compared with the pixel component values of the first matrix M1. The difference step 3 subtracts the second matrix M2 from the first matrix M1, pixel-by-pixel, to produce a third matrix M3 of 720 x 560 difference values (DI) which are coded by the first coding step 4 into a first set of resultant digital data RDD1. The sub-sampling step 2 takes every second pixel component value of the second matrix M2, both horizontally and vertically, to produce a fourth matrix M4 of 360 x 280 pixel component values (NO) of reduced pixel density. The pixel information represented by this fourth matrix M4 is in respect of a normal resolution display. The second coding step 5 codes the pixel component values of the fourth matrix M4 into a second set of resultant digital data RDD2. The pixel component values of the matrices M1 to M4 can be conventional pulse code modulated (PCM) data.

In the Applicant's prior application, the set of data RDD1 can be the result of quantising and run-length coding the PCM data of the matrix M3 and the set of data RDD2 can be the result of delta coding the PCM data of the matrix M4. The two sets of digital data RDD1 and RDD2 are available for storage on a suitable storage medium SM.

The representative diagram in Figure 2, of the decoding method shows a first decoding step 6, a second decoding step 7, an interpolation filtering step 8, and an addition step 9.

The first set of digital data RDD1 as read from the storage medium SM, is applied to the decoding step 7 which produces a reconstituted matrix M3' of 720 x 560 difference values (DI). The second set of digital data RDD2 as read from the storage medium SM, is decoded by the decoding step 6 and applied to the interpolation filtering step 8 as the reconstituted fourth matrix M4', of 360 x 280 pixel component values (NO). The interpolation filtering step 8 produces a restituted second matrix M2' of 720 x 560 pixel component values (LO). The two matrices M2' and M3' are applied to the addition step 9 which produces a restituted first matrix M1' of 720 x 560 pixel component values (HI). This restituted first matrix M1' constitutes resultant pixel information which can be used in respect of a high resolution display of the original image. The reconstituted fourth matrix M4' can be used in respect of a normal (lower) resolution display of the original image.

Because for these prior coding and decoding methods the latter does not have available the actual pixel component values of the second filtered matrix M2, but only the corresponding decoded and interpolated pixel component values of the restituted second matrix M2', it has been found that there is a loss of accuracy in the decoding method when the restituted second matrix M2' is added to the reconstituted matrix M3' of difference values to produce the restituted first matrix M1' corresponding to the original first matrix M1.

It is an object of the present invention to provide an improved coding method which avoids this limitation in a complementary decoding method.

According to the invention a method of image coding by which pixel information for at least one pixel component value of a plurality of pixels forming an image is coded into digital data which can be recorded on a suitable storage medium, comprises the steps of:-
(i) obtaining said pixel information as a first matrix of m x n pixel component values, where m and n are integers,
(ii) low-pass filtering these pixel component values of the first matrix to produce a second matrix of m x n pixel component values, which define a lower resolution image compared with the pixel component values of the first matrix,
(iii)sub-sampling said second matrix of pixel component values to produce a fourth matrix of m/a x n/b pixel component values of reduced density, where a and b are factors of m and n, respectively, and
(iv) coding said fourth matrix of pixel component values with data compression into a second set of digital data for storage on a storage medium;
(v) decoding the second set of digital data in a manner complementary to step (iv) to reconstitute the fourth matrix of pixel component values,
(vi) interpolation filtering said reconstituted fourth matrix of pixel component values to restitute said second matrix of pixel component values,
(vii)subtracting the restituted second matrix from the first matrix pixel-by-pixel to produce a third matrix of m x n difference values, and
(viii) coding said third matrix of difference values into a first set of digital data for storage on a storage medium.

With this improved method of coding, the second matrix which is subtracted from the first matrix to produce the third matrix of difference values, is a restituted second matrix which is substantially identical to the restituted second matrix which is added to the reconstituted third matrix in the complementary decoding method set forth above in order to restore the original pixel information. Therefore the restored original pixel information is made independent of the subsequent coding and interpolation errors, because these errors are now also introduced into the coding method. As a consequence, the restored original pixel information is subject only to errors resulting from coding the third matrix of difference values.

The coding method according to the above steps (i) to (viii) can include the further step (ix) of recording the digital data produced by steps (iv) and (viii) onto a storage medium.

In carrying out the coding method, the low-pass filtering of the pixel component values of the first matrix in step (ii), and the sub-sampling of the pixel component values of the second matrix in step (iii) can both be by a factor of two both horizontally and vertically. This enables the reconstituted fourth matrix of pixel component values of a subsequent decoding method to be used directly in respect of pixel information for a normal (lower) resolution display.

In carrying the present invention into effect, the considerations concerning data compression are the same as those discussed in Applicants aforementioned patent application.

In the coding method according to the invention, the coding of the difference values into the first set of digital data preferably consists in quantizing these difference values into a smaller number of quantized values, including zero, and coding the quantized values using a run-length code. The quantization levels which are used also form part of the first set of digital data. These levels can be chosen so as to best match particular images. Alternatively, a fixed set of quantization levels may be used which is optimised for a range of image sources. Such quantisation can, of course, give rise to errors to which the restored original pixel information would be subject.

Further data compression can be realised in the coding of the fourth matrix of pixel component values into the second set of digital data for storage as dealt with by step (iv). This further compression is also based on the fact that natural images have a correlation and, typically, graceful boundary transitions. This means that delta coding rather than absolute coding for a finite bandwidth can give a significant improvement in compression whilst maintaining picture quality.

Therefore, in the coding method according to the invention,the coding of the pixel component values of the fourth matrix into the second set of digital data preferably consists in delta coding these pixel component values.

It will of course be apparent that when the coding method employs these coding techniques, a subsequent decoding method will include complementary decoding techniques.

A coding arrangement according to the invention comprises:-
- means for obtaining pixel information for at least one pixel component value of a plurality of pixels forming an image as a first matrix of m x n pixel component values, where m and n are integers,
- means for low-pass filtering these pixel component values of the first matrix to produce a second matrix of m x n pixel component values, which define a lower resolution image compared with the pixel component values of the first matrix,
- means for sub-sampling said second matrix of pixel component values to produce a fourth matrix of m/a x n/b pixel component values of reduced density, where a and b are factors of m and n, respectively,
- means for coding said fourth matrix of pixel component values with data compression into a second set of digital data for storage on a storage medium.
- means complementary to said coding means for decoding the second set of digital data to reconstitute the fourth matrix of pixel component values,
- means for interpolation filtering said reconstituted fourth matrix of pixel component values to restitute said second matrix of pixel component values,
- means for subtracting the restituted second matrix from the first matrix pixel-by-pixel to produce a third matrix of m x n difference values, and
- means for coding said third matrix of difference values into a first set of digital data for storage on a storage medium.

The coding arrangement can include further means for recording the resultant digital data onto a storage medium.

In the coding arrangement, the means for low-pass filtering the pixel component values of the first matrix and the means for sub-sampling the pixel component values of the second matrix can both effect filtering by a factor of two both horizontally and vertically.

The coding arrangement can include further means by which the coding of the difference values into digital data consists in quantizing these difference values into a smaller number of quantizing values, including zero, and coding the quantised values using a run-length code.

The means for coding the pixel component values of the fourth matrix into digital data may in particular comprise a delta coder.

In order that the invention may be more fully understood reference will now be made by way of example to the accompanying drawings, of which:-
Figure 1, as aforesaid represents diagrammatically a prior coding method;
Figure 2, as aforesaid, represents diagrammatically a prior decoding method;
Figure 3 represents diagrammatically a coding method according to the invention;
Figure 4 shows diagrammatically a coding arrangement using the coding method of Figure 3;
Figure 5 shows diagrammatically a decoding arrangement using the prior decoding method of Figure 2; and
Figure 6 shows diagrammatically an image display apparatus for utilising digital data which has been produced by a coding method according to the invention.

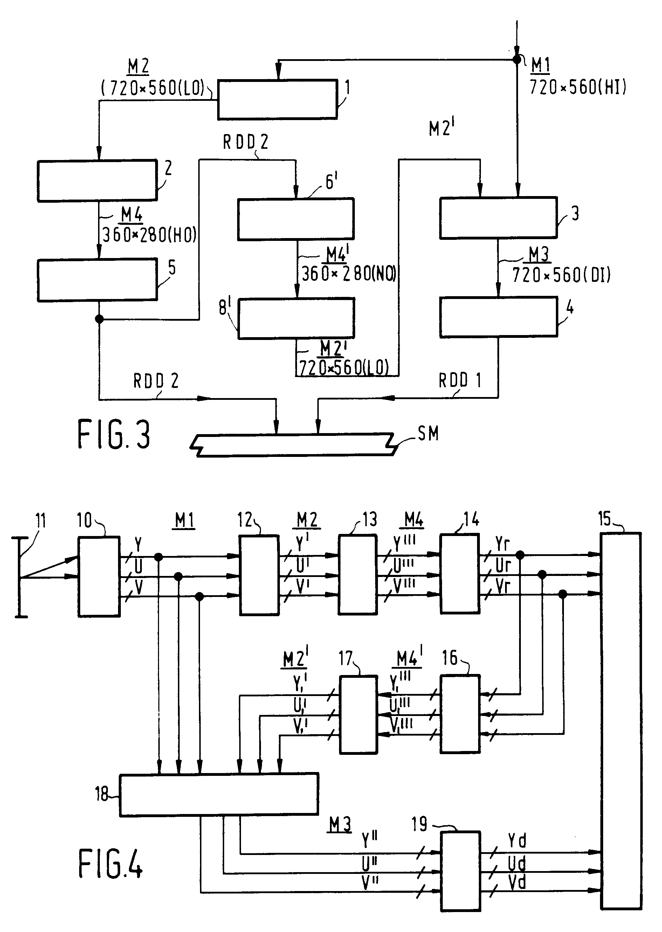

Referring to the drawings, the representative diagram in Figure 3, of the coding method according to the invention, shows a low-pass filtering step 1, a sub-sampling step 2, a difference step 3, a first coding step 4 and a second coding step 5. Pixel information for at least one component value of a plurality of pixels representing an image is applied to the low-pass filtering step 1 and also to the difference step 3. This pixel information is assumed by way of illustrative example to comprise a first matrix M1 of 720 x 560 pixel component values (HI). This pixel information is in respect of an enhanced resolution display which would be better than both standard 625 line camera resolution and studio quality and would require a high definition television screen for displaying the image concerned at full resolution.

The low-pass filtering step 1 effects low pass filtering to produce a second matrix M2 of 720 x 560 pixel component values (LO) which are in respect of a lower resolution image compared with the pixel component values of the first matrix M1. The coding method so far described corrresponds to the prior coding method represented in Figure 1, and identical steps in the two coding methods have been given the same reference numbers for the sake of convenience. In the present coding method it is not the second matrix M2 which is used in the difference step 3, but instead a restituted second matrix M2ʹ which is derived in the manner described below. The difference step 3 subtracts the restituted second matrix M2ʹ from the first matrix M1, pixel-by-pixel, to produce a third matrix M3 of 720 x 560 difference values (DI) which are coded by the first coding step 4 into a first set of resultant digital data RDD1. The sub-sampling step 2 takes every second pixel component value of the second matrix M2, both horizontally and vertically, to produce a fourth matrix M4 of 360 x 280 pixel component values (NO) of reduced pixel density. The pixel information represented by this fourth matrix M4 is in respect of a normal resolution display. The second coding step 5 codes the pixel component values of the fourth matrix M4 into a second set of resultant digital data RDD2. The two sets of digital data RDD1 and RDD2 are available for storage on a suitable storage medium SM.

In order to derive the restituted second matrix M2ʹ, the second set of digital data RDD2 is applied to a decoding step 6ʹ which is complementary to the coding step 5 and produces a decoded fourth matrix M4ʹ. This decoded fourth matrix M4ʹ is applied to an interpolation filtering step 8ʹ which restitutes by interpolation the second matrix M2 as the matrix M2ʹ.

The interpolation filtering step 8ʹ is identical to that (8) used in the decoding method of Figure 2 and, likewise, the decoding step 6ʹ is identical to that (6) used in the decoding method of Figure 2. As a consequence, in the coding method according to the invention, the difference step 3 is performed using, as the second matrix of pixel component values which are in respect of a lower resolution image, a restituted matrix which is identical to the restituted matrix which is subseqently to be used in the addition step of the decoding method. Therefore, as mentioned previously, the original pixel information of the matrix M1ʹ which is restored by the decoding method is made independent of any errors introduced by the decoding step 6 and the interpolation filtering step 8 of the decoding method. Thus, the restored original pixel information of the matrix M1ʹ is subject only to errors resulting from coding the third matrix M3 of difference values.

The pixel component values of all the matrices M1, M2, M2ʹ, M3 and M4 can be conventional pulse code modulated (PCM) data. The first coding step 4 can effect quantizing and run-length coding and the second coding step 5ʹ can effect delta coding.

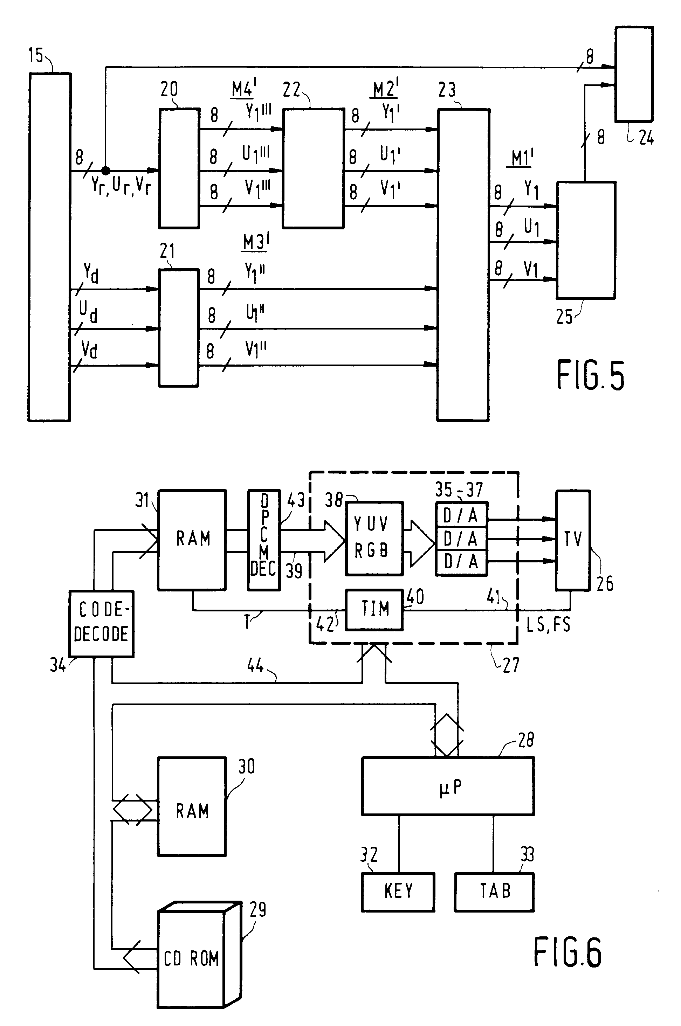

The coding arrangement shown in Figure 4 comprises a video camera 10 for producing image samples of a scene 11. The camera 10 produces the image samples as pixel information in a matrix M1 of 720 x 560 discrete pixel values. Each of these pixel values is in three component values represented by 3 x 8-bit PCM codes using YUV coding, where Y is the luminance component of a pixel and U and V are the two chrominance components. The matrix M1 (and also each of the other matrices in the coding arrangement is therefore made up of three discrete sub-matrices one in respect of each of the pixel component values Y, U and V. This coding gives uncompressed natural pictures, 8 bits in depth for 256 colours, so that with 3 x 8 bits per pixel approximately 1210K 8-bit bytes storage capacity would be required for a full-screen picture. The coding arrangement achieves data compression which results in a considerable saving on this storage capacity, without any serious degrading of picture quality.

The YUV signal codes are applied to a low-pass filter 12 which filters these signal codes. The result is lower resolution pixel information in a matrix M2 of 720 x 560 discrete pixel values which are still represented by 3 x 8-bit PCM codes using YUV coding.

The YʹUʹVʹ signal codes from the filter 12 are applied to a sub-sampling filter 13 which is operable to filter out every second pixel value of the matrix M2 both horizontally and vertically to produce low resolution pixel information in a matrix M4 of 360 x 280 pixel values which are still represented by 3x8-bit PCM codes using YUV coding. The YʹʺUʹʺVʹʺ signal codes from the filter 13 are applied to a delta PCM (DPCM) coder 14. The resulting signal codes Yr, Ur, Vr constitute a first set of digital data which is stored on a storage medium 15.

The resulting signal codes Yr,Ur,Vr from the coder 14 are also applied to a decoder 16 which is a DPCM decoder and is operable to produce a decoded matrix M4ʹ of 360x280 pixel values as represented by the Y₁ʺʹ,U₁ʺʹ,V₁ʺʹ signal codes. These signal codes are applied to an interpolation filter 17 which is operable to produce a restituted matrix M2ʹ of 720x560 pixel values as represented by the Y₁ʹ,U₁ʹ,V₁ʹ signal codes. These latter signal codes are applied to a difference circuit 18. The difference circuit 18 also has applied to it the YUV signal codes from the camera 10 and is operable to subtract pixel-by-pixel the pixel values in the matrix M2ʹ from the pixel values in the matrix M1. The result is a matrix M3 of 720 x 560 pixel difference values which are still represented 3 x 8-bit PCM codes using YUV coding. The YʺUʺVʺ signal codes from the difference circuit 18 are applied to a quantization and run-length coder 19, where they are quantized into a small number of quantized values, including zero, and the resulting quantized values are run-length coded. The resulting signal codes Yd, Ud, Vd constitute a second set of digital data which is stored on the storage medium 15.

The storage medium 15 is suitably an optical record carrier (i.e. a compact disc) which serves as a read-only memory to provide permanent storage of the digital data. The digital data would be reformatted (by suitable reformatting means not shown) prior to storage to make it compatible with the storage requirements for compact discs. This reformatting is known in the art and can involve block-type and/or convolution-type coding, using e.g. Reed/Solomon codes, to implement error detection and correction of the stored digital data. GB Application 8507248 gives an example of such coding techniques.

For the sake of completeness, a decoding arrangement for performing the decoding method of Figure 2 is shown in Figure 5. This decoding arrangement comprises two decoders 20 and 21 for receiving from the storage medium 15, in respect of an image to be displayed, a respective one of two sets of digital data (following de-reformatting of this digital data). The decoder 20 is a DCPM decoder and receives the set of digital data representing the resultant Yr,Ur,Vr, signal codes as produced by the coder 14 of the coding arrangement of Figure 4. The output from the decoder 20 is the decoded matrix M4ʹ of 360 x 280 pixel values as represented by the Y₁ʹʺ,U₁ʹʺ,V₁ʹʺ signal codes. These signal codes are applied to an interpolation filter 22 which is operable to produce a restituted matrix M2ʹ of 720 x 560 pixel values as represented by the Y₁ʹ,U₁ʹ,V₁ʹ signal codes. These latter signal codes are applied to an adding circuit 23.

The decoder 21 is a de-quantization and run-length decoder and receives the set of digital data representing the resultant difference codes Yd,Ud,Vd as produced by the coder 19 of the coding arrangement of Figure 4. The output from the decoder 21 is the restituted matrix M3ʹ of pixel difference values as represented by Y₁ʺ,U₁ʺ,V₁ʺ signal codes. These signal codes are also applied to the adding circuit 23, the resulting output from which is the restituted matrix M1ʹ of 720 x 560 pixel values as represented by the Y₁,U₁,V₁ signal codes.

There is also shown in Figure 5 a display memory 24 of a data display apparatus in which the decoding arrangement may be embodied. It is assumed that this display memory 24 requires the digital codes which represent the pixels of an image to be displayed to be in DPCM form. Accordingly, the Y₁,U₁,V₁ signal codes at the output of the combining circuit 23 are DPCM coded in a coder 25 and the resultant DPCM codes are written into the display memory 24 as the pixel information for a high resolution display of 720 x 560 pixels. DPCM codes for a normal resolution display of 360 x 280 pixels are directly available from the storage medium 15 for writing into the display memory 24, that is the resultant Yr,Ur,Vr signal codes.

The article "The Laplacian Pyramid as a Compact Image Code", IEEE Transactions on Communications, Vol. COM-31, No. 4, April 1983, provides a theoretical background to an image coding technique pertaining to the present invention.

The publication "Philips Technical Review", Volume 40, 1982, No. 6, describes four articles on compact discs.

In the coding arrangement of Figure 4 it has been assumed that pixel component values Y, U and V have been coded identically. However, because the chrominance components U and V have far less relevance than the luminance component Y in defining picture content, these chrominance components U and V can, in practice, be sampled horizontally at half the sampling rate that the luminance component Y is sampled. As a consequence, the matrices for the chrominance components U and V would have half the horizontal resolution compared with the matrices for the luminance component Y. As another alternative, the chrominance components U and V, with or without reduced sampling relative to the component Y, can be stored directly (after reformatting) on the storage medium using only delta coding and only the luminance component Y is coded as a combination of a matrix of low resolution Y values of reduced density and a matrix of values representing the difference between high resolution Y values and the low resolution Y values of full density.

The image display apparatus shown in Figure 6 comprises a display device 26, a display generator 27, a processor 28, a mass memory device 29, a program memory 30, a display memory 31, user interface apparatus 32 and 33, and a code-decode device 34 which includes a decoding arrangement of the form shown in Figure 5. The display device 26 is suitably a colour television monitor which is connected to receive R,G,B video signals from the display generator 27. These R,G,B video signals are produced in the display generator 27 by three digital-to-analogue converters 35, 36 and 37, respectively. The display generator 27 also includes a YUV-RGB matrix converter 38 which is responsive to decoded digital data representing YUV values and received from the display memory 31 over a bus 39 to produce digital signals representing the RGB values for driving the converters 35, 36 and 37. A display timer 40 in the display generator 27 provides line and field synchronisation signals LS and FS for the television monitor 26 over a connection 41. The timer 40 also provides over a connection 42 timing signals T for controlling the read-out of digital data from the display memory 31.

The display memory 31 is a random-access memory which has a capacity for storing in DPCM form the digital data for at least one display image. A DPCM decoder 43 decodes the digital data read out from the display memory 31 prior to its application to the display generator 27. A combined address/data bus 44 interconnects the display generator 27 and the display memory 31 with the processor 28. The program memory 30, which is also at least partially a random-access memory, is also connected to the address/data bus 44. The program memory 30 contains permanent program data for controlling the "house-keeping" operations of the processor 28. The user interface apparatus comprises a keyboard data entry device 32 and a graphics tablet 33. The processor 28 can be a commercially available microprocessor, for instance the Signetics S68000 µP.

The mass memory device 29 is a compact disc device and is also connected to the address/data bus 44. Digital data which is read out from the device 29 under the control of the processor 28 is de-reformatted, decoded and recoded into DPCM form by the device 34 and written into the display memory 31.

## Claims

1. A method of image coding by which pixel information for at least one pixel component value of a plurality of pixels forming an image is coded into digital data which can be recorded on a suitable storage medium, comprising the steps of :-
(i) obtaining said pixel information as a first matrix of m x n pixel component values, where m and n are integers,
(ii) low-pass filtering these pixel component values of the first matrix to produce a second matrix of m x n pixel component values which define a lower resolution image compared with the pixel component values of the first matrix,
(iii) sub-sampling said second matrix of pixel component values to produce a fourth matrix of m/a x n/b pixel component values of reduced density, where a and b are factors of m and n, respectively, and
(iv) coding said fourth matrix of pixel component values with data compression into a second set of digital data for storage on a storage medium;
(v) decoding the second set of digital data in a manner complementary to step (iv) to reconstitute the fourth matrix of pixel component values,
(vi) interpolation filtering said reconstituted fourth matrix of pixel component values to restitute said second matrix of pixel component values,
(vii) subtracting the restituted second matrix from the first matrix pixel-by-pixel to produce a third matrix of m x n difference values, and
(viii) coding said third matrix of difference values into a first set of digital data for storage on a storage medium.

2. A coding method as claimed in Claim 1, including the further step (ix) of recording the digital data produced by steps (iv) and (viii) onto a storage medium.

3. A coding method as claimed in Claim 1 or Claim 2, wherein the low-pass filtering of the pixel component values of the first matrix in step (ii), and the sub-sampling of the pixel component values of the second matrix in step (iii) are both effected by a factor of two horizontally and vertically.

4. A coding method as claimed in Claim 1, Claim 2 or Claim 3, in which the coding of the difference values into the first set of digital data consists in quantizing these difference values into a smaller number of quantized values, including zero, and coding the quantized values using a run-length code.

5. A coding method as claimed in any preceding Claim,in which the coding of the pixel component values of the fourth matrix into the second set of digital data consists in delta coding these pixel component values.

6. A coding arrangement by which pixel information for at least one pixel component value of a plurality of pixels forming an image is coded into digital data which can be recorded on a suitable storage medium comprising:-
- means for obtaining said pixel information as a first matrix of m x n pixel component values, where m and n are integers,
- means for low-pass filtering these pixel component values of the first matrix to produce a second matrix of m x n pixel component values, which define a lower resolution image compared with the pixel component values of the first matrix,
- means for sub-sampling said second matrix of pixel component values to produce a fourth matrix of m/a x n/b pixel component values of reduced density, where a and b are factors of m and n, respectively,
- means for coding said fourth matrix of pixel component values with data compression into a second set of digital data for storage on a storage medium,
- means complementary to said coding means for decoding the second set of digital data to reconstitute the fourth matrix of pixel component values,
- means for interpolation filtering said reconstituted fourth matrix of pixel component values to restitute said second matrix of pixel component values,
- means for subtracting the restituted second matrix from the first matrix pixel-by-pixel to produce a third matrix of m x n difference values, and
- means for coding said third matrix of difference values into a first set of digital data for storage on a storage medium.

7. A coding arrangement as claimed in Claim 6, wherein said low-pass filtering means and said sub-sampling means effect filtering by a factor of two both horizontally and vertically.

8. A coding arrangement as claimed in Claim 6 or 7, in which the means for coding said matrix of difference values quantizes these difference values into a smaller number of quantized values, including zero, and codes the quantized values using a run-length code.

9. A coding arrangement as claimed in Claim 6, 7 or 8, in which the means for coding the pixel component values of the fourth matrix delta codes these pixel component values.

10. A coding arrangement as claimed in any one of Claims 6 to 9 including a storage medium on which said first and second sets of digital data are recorded.

11. A coding arrangement as claimed in Claim 10, wherein said storage medium is an optical record carrier and an associated optical read device.

12. An optical record carrier for use in an arrangement as claimed in Claim 11, having stored thereon said first and second sets of digital data.

13. A method of coding as claimed in any one of Claims 1 to 5, for use with YUV coding, wherein Y is the luminance component of a pixel and U and V are the two chrominance components, wherein these three pixel component values are available as said picture information in respective first matrices and are coded separately.

14. A method as claimed in Claim 13, wherein the first matrix of each of the two chrominance component values has half the horizontal resolution of the first matrix for the luminance component value.

15. A method of coding as claimed in any one of Claims 1 to 5, for use with YUV coding, where Y is the luminance component of a pixel and U and V are the two chrominance components, wherein only the luminance component value is said picture information and is coded, the two chrominance component values being available directly for storage on a storage medium.

16. A coding arrangement as claimed in any one of Claims 6 to 11, for use with YUV coding, where Y is the luminance component of a pixel and U and V are the two chrominance components, wherein all these pixel component values are coded separately starting with respective first matrices.

17. A coding arrangement as claimed in Claim 16, wherein the first matrix of each of the two chrominance component values has half the horizontal resolution of the first matrix for the luminance component value.

18. A coding arrangement as claimed in any one of Claims 6 to 11, for use with YUV coding, where Y is the luminance component of a pixel and U and V are the two chrominance components, wherein only the luminance component value is said picture information and is coded, the two chrominance component values being available directly for storage on a storage medium.

19. A data display apparatus comprising:-
- a display device for displaying images composed of discrete pixels each of which is represented by a respective digital code which defines a pixel in terms of chrominance and luminance pixel component values;
- a display memory having a capacity for storing the digital codes for an image to be displayed;
- a display generator for producing video signals from the digital codes in the display memory to drive the display device;
- a mass memory device;
- logic means for the selective transfer of digital data in said mass memory device to the display memory;
characterised in that digital data stored in said mass memory device is coded by the method claimed in Claim 1, and the apparatus includes decoding means for decoding first and second sets of digital data read out from said mass memory device in respect of an image to be displayed, into said digital codes for storage in said display memory.

20. A data display apparatus as claimed in Claim 19, characterised in that the coding of said digital data stored in said mass memory device includes the feature of Claims 3, 4, 5, 13, 14 or 15.

21. A data display apparatus as claimed in Claim 19 or Claim 20, characterised in that said mass memory device is an optical record carrier and associated optical read device.

## Patentansprüche

1. Verfahren zur Bildcodierung, bei dem Bildpunktinformation für mindestens einen Bildpunktbestandteilwert aus einer Vielzahl von Bildpunkten, die ein Bild bilden, in digitale Daten codiert werden, die auf einem geeigneten Speichermedium aufgezeichnet werden können, und dieses Verfahren aus folgenden Schritten besteht:-
(i) Erhalt der genannten Bildpunktinformation als erste Matrix von m x n Bildpunktbestandteilwerten, wobei m und n ganze Zahlen sind,
(ii) Tiefpaßfilterung dieser Bildpunktbestandteilwerte der ersten Matrix, um eine zweite Matrix von m x n Bildpunktbestandteilwerten zu erzeugen, die ein Bild mit geringerer Auflösung im Vergleich mit den Bildpunktbestandteilwerten der ersten Matrix definieren,
(iii) Sub-Sampling der genannten zweiten Matrix aus Bildpunktbestandteilwerten, um eine vierte Matrix von Bildpunktbestandteilwerten m/a x n/b mit verringerter Dichte zu erzeugen, wobei a und b Faktoren von m bzw. n sind, und
(iv) Codierung der genannten vierten Matrix aus Bildpunktbestandteilwerten mit Datenkomprimierung zu einer zweiten digitalen Datenmengen zur Speicherung auf einem Speichermedium;
(v) Decodierung der zweiten digitalen Datenmengen in Ergänzung zu Schritt (iv) zur Wiederherstellung der vierten Matrix aus Bildpunktbestandteilwerten,
(vi) Interpolationsfilterung der genannten wiederhergestellten vierten Matrix aus Bildpunktbestandteilwerten, um die genannte zweite Matrix aus Bildpunktbestandteilwerten wiederherzustellen,
(vii) bildpunktweise Subtraktion der wiederhergestellten zweiten Matrix von der ersten Matrix, um eine dritte Matrix von m x n Differenzwerten zu erzeugen, und
(viii) Codierung der genannten dritten Matrix von Differenzwerten zu einer ersten digitalen Datenmengen zur Speicherung auf einem Speichermedium.

2. Codierungsverfahren nach Anspruch 1 mit dem weiteren Schritt (ix) zur Aufzeichnung der in Schritt (iv) und (viii) erzeugten Daten auf einem Speichermedium.

3. Codierungsverfahren nach Anspruch 1 oder 2, wobei die Tiefpaßfilterung der Bildpunktbestandteilwerte der ersten Matrix in Schritt (ii) und das Sub-Sampling der Bildpunktbestandteilwerte der zweiten Matrix in Schritt (iii) beide sowohl horizontal als auch vertikal um den Faktor 2 bewirkt werden.

4. Codierungsverfahren nach Anspruch 1, 2 oder 3, bei dem die Codierung der Differenzwerte zu einer ersten digitalen Datenmengen in der Quantisierung dieser Differenzwerte zu einer Kleineren Anzahl von quantisierten Werten, einschließlich null, besteht, und Codierung der quantisierten Werte anhand eines Lauflängencodes.

5. Codierungsverfahren nach allen vorausgehenden Ansprüchen, bei dem die Codierung der Bildpunktbestandteilwerte der vierten Matrix zu einer zweiten digitalen Datenmengen aus der Deltacodierung dieser Bildpunktbestandteilwerte besteht.

6. Codierungsanordnung, bei der Bildpunkinformationen für zumindest einen Bildpunktbestandteilwert aus einer Vielzahl von Bildpunkten, die ein Bild bilden, zu digitalen Daten codiert werden, die auf einem geeigneten Speichermedium aufgezeichnet werden können, wobei diese Anordnung die nachfolgenden Elemente aufweist:
- Mittel zum Erhalt der genannten Bildpunktinformationen als eine erste Matrix von m x n Bildpunktbestandteilwerten, wobei m und n ganze Zahlen sind,
- Mittel zur Tiefpaßfilterung der Bildpunktbestandteilwerte der ersten Matrix, um eine zweite Matrix von m x n Bildpunktbestandteilwerten zu erzeugen, die ein Bild mit geringerer Auflösung definieren, verglichen mit den Bildpunktbestandteilwerten der ersten Matrix,
- Mittel zum Sub-Sampling der genannten zweiten Matrix von Bildpunktbestandteilwerten, um eine vierte Matrix von m/a x n/b Bildpunktbestandteilwerten mit reduzierte Dichte zu erzeugen, wobei a und b Faktoren von m bzw. n sind,
- Mittel zur Codierung der genannten vierten Matrix von Bildpunktbestandteilwerten mit Datenkomprimierung zu einer zweiten digitalen Datenmengen zur Speicherung auf einem Speichermedium,
- Mittel in Ergänzung zu den genannten Codierungsmitteln für die Decodierung der zweiten digitalen Datenmengen zur Wiederherstellung der vierten Matrix von Bildpunktbestandteilwerten,
- Mittel zur Interpolationsfilterung der genannten wiederhergestellten vierten Matrix von Bildpunktbestandteilwerten zur Wiederherstellung der genannten zweiten Matrix von Bildpunktbestandteilwerten,
- Mittel zur bildpunktweisen Subtraktion der wiederhergestellten zweiten Matrix von der ersten Matrix, um eine dritte Matrix von m x n Differenzwerten zu erzeugen, und
- Mittel zur Codierung der genannten dritten Matrix von Differenzwerten zu einer ersten digitalen Datenmengen zur Speicherung auf einem Speichermedium.

7. Codierungsanordnung nach Anspruch 6, wobei die genannten Mittel zur Tiefpaßfilterung und zum Sub-Sampling eine Filterung um einen Faktor 2 sowohl horizontal als auch vertikal bewirken.

8. Codierungsanordnung nach Anspruch 6 oder 7, in der die Mittel zur Codierung der genannten Matrix von Differenzwerten diese Differenzwerte zu einer Kleineren Anzahl von quantisierten Werten quantisieren, einschließlich null, und die quantisierten Werte anhand eines Lauflängencodes codieren.

9. Codierungsanordnung nach Anspruch 6, 7 oder 8, in der die Mittel zur Codierung der Bildpunktbestandteilwerte der vierten Matrix eine Deltacodierung dieser Bildpunktbestandteilwerte vornehmen.

10. Codierungsanordnung nach einem der Ansprüche 6 bis 9, die ein Speichermedium enthält, auf dem die genannten ersten und zweiten digitalen Datenmengen aufgezeichnet werden.

11. Codierungsanordnung nach Anspruch 10, wobei das genannte Speichermedium ein optischer Datenträger und ein zugehöriges optisches Lesegerät ist.

12. Optischer Datenträger zur Verwendung in einer Anordnung nach Anspruch 11, auf dem die genannten ersten und zweiten digitalen Datenmengen gespeichert sind.

13. Verfahren zur Codierung nach einem der Ansprüche 1 bis 5, zur Anwendung mit YUV-Codierung, wobei Y der Leuchtdichtenbestandteil eines Bildpunktes und U und V die beiden Farbtonbestandteile sind, wobei diese drei Bildpunktbestandteilwerte als die genannten Bildinformationen in den entsprechenden ersten Matrizen zur Verfügung stehen und separat codiert werden.

14. Verfahren nach Anspruch 13, wobei die erste Matrix von jeder der beiden Farbtonbestandteilwerte die Hälfte der horizontalen Auflösung der ersten Matrix für den Leuchtdichtenbestandteilwert aufweist.

15. Verfahren zur Codierung nach einem der Ansprüche 1 bis 5, zur Anwendung mit YUV-Codierung, mit Y als Leuchtdichtenbestandteil eines Bildpunktes und U und V als die beiden Farbtonbestandteile, wobei die genannte Bildinformation nur aus dem Wert für den Leuchtdichtenbestandteil besteht und codiert wird, und die beiden Werte für den Farbtonbestandteil direkt zur Speicherung auf einem Speichermedium zur Verfügung stehen.

16. Eine Codierungsanordnung nach jedem der Ansprüche 6 bis 11, zur Anwendung mit YUV-Codierung, wobei Y der Leuchtdichtenbestandteil eines Bildpunktes und U und V die beiden Farbtonbestandteile sind, wobei alle diese Bildpunktbestandteilwerte einzeln codiert werden, beginnend mit den jeweils ersten Matrizen.

17. Codierungsanordnung nach Anspruch 16, wobei die erste Matrix von jedem der beiden Farbtonbestandteilwerte die halbe horizontale Auflösung der ersten Matrix für den Leuchtdichtenbestandteilwert aufweist.

18. Codierungsanordnung nach jedem der Ansprüche 6 bis 11, zur Anwendung mit YUV-Codierung, wobei Y der Leuchtdichtenbestandteil eines Bildpunktes und U und V die beiden Farbtonbestandteile sind, wobei nur der Wert für den Leuchtdichtenbestandteil die genannte Bildinformation ist und codiert wird, und die beiden Farbtonbestandteilwerte direkt zur Speicherung auf einem Speichermedium zur Verfügung stehen.

19. Datenanzeigeapparat mit:-
- einem Anzeigegerät zur Anzeige von Bildern, die aus einzelnen Bildpunkten zusammengesetzt sind, von denen jeder durch einen entsprechenden digitalen Code dargestellt wird, der einen Bildpunkt in Termen von Farbton- und Leuchtdichtenbestandteilwerten definiert;
- einem Anzeigespeicher mit Speicherkapazität zur Speicherung der digitalen Codes eines anzuzeigenden Bildes;
- einem Anzeigegenerator zur Erzeugung von Videosignalen aus den digitalen Codes im Anzeigespeicher, zur Ansteuerung des Anzeigegerätes;
- einem Massenspeichergerät;
- logischen Mitteln zur selektiven Übertragung digitaler Daten aus dem genannten Massenspeichergerät in den Anzeigespeicher;
dadurch gekennzeichnet, daß im genannten Massenspeichergerät gespeicherte digitale Daten mit dem Verfahren nach Anspruch 1 codiert werden, und daß der Apparat Decodierungsmittel zur Decodierung der aus dem genannten Massenspeichergerät für das anzuzeigende Bild ausgelesenen ersten und zweiten digitalen Datenmengen in die genannten digitalen Codes zur Speicherung im genannten Anzeigespeicher aufweist.

20. Datenanzeigeapparat nach Anspruch 19, dadurch gekennzeichnet, daß die Codierung der genannten digitalen Daten, die im genannten Massenspeichergerät gespeichert sind, die Merkmale der Ansprüche 3, 4, 5, 13, 14 oder 15 aufweist.

21. Datenanzeigegerät nach Anspruch 19 oder nach Anspruch 20, dadurch gekennzeichnet, daß das genannte Massenspeichergerät ein optischer Datenträger und ein zugehöriges optisches Lesegerät ist.

## Revendications

1. Procédé de codage d'images par lequel des informations en pixels pour au moins une valeur de composante de pixel d'une pluralité de pixels formant une image sont codées en données numériques qui peuvent être enregistrées sur un support de données approprié, ce procédé comprenant les étapes suivantes :
(i) on obtient lesdites informations en pixels sous la forme d'une première matrice de m x n valeurs de composantes de pixels, où m et n sont des nombres entiers;
(ii) on soumet à un filtrage passe-bas ces valeurs de composantes de pixels de la première matrice pour produire une deuxième matrice de m x n valeurs de composantes de pixels, qui définissent une image de résolution inférieure en comparaison des valeurs de composantes de pixels de la première matrice;
(iii) on sous-échantillonne ladite deuxième matrice de valeurs de composantes de pixels pour produire une quatrième matrice de m/a x n/b valeurs de composantes de pixels de densité réduite où a et b sont des facteurs de m et n, respectivement;
(iv) on code ladite quatrième matrice de valeurs de composantes de pixels par compression de données en un deuxième jeu de données numériques à stocker sur un support de données;
(v) on décode le deuxième jeu de données numériques de manière complémentaire à l'étape (iv) pour reconstituer la quatrième matrice de valeurs de composantes de pixels;
(vi) on filtre par interpolation ladite quatrième matrice reconstituée de valeurs de composantes de pixels pour restituer ladite deuxième matrice de valeurs de composantes de pixels;
(vii) on soustrait la deuxième matrice restituée de la première matrice, pixel par pixel, pour produire une troisième matrice de m x n valeurs de différence, et
(viii) on code ladite troisième matrice de valeurs de différence en un premier jeu de données numériques à stocker sur un support de données.

2. Procédé de codage selon la revendication 1, comprenant une autre étape (ix) d'enregistrement des données numériques produites par les étapes (iv) et (viii), sur un support de données.

3. Procédé de codage selon la revendication 1 ou 2, dans lequel le filtrage passe-bas des valeurs de composantes de pixels de la première matrice dans l'étape (ii) et le sous-échantillonnage des valeurs de composantes de pixels de la deuxième matrice dans l'étape (iii) sont tous deux réalisés selon un facteur de deux, horizontalement et verticalement.

4. Procédé de codage selon la revendication 1, 2 ou 3, dans lequel le codage des valeurs de différence en un premier jeu de données numériques consiste à quantifier ces valeurs de différence en un nombre plus petit de valeurs quantifiées, y compris zéro, et à coder les valeurs quantifiées en utilisant un code de longueur de passage.

5. Procédé de codage selon l'une quelconque des revendications précédentes, dans lequel le codage des valeurs de composantes de pixels de la quatrième matrice en un deuxième jeu de données numériques consiste à effectuer un coadage delta de ces valeurs de composantes de pixels.

6. Agencement de codage dans lequel des informations en pixels pour au moins une valeur de composante de pixels d'une pluralité de pixels formant une image sont codées en données numériques qui peuvent être enregistrées sur un support de données approprié, comprenant :
- des moyens pour obtenir lesdites informations en pixels sous la forme d'une première matrice de m x n valeurs de composantes de pixels, où m et n sont des nombres entiers;
- des moyens pour soumettre à un filtrage passe-bas ces valeurs de composantes de pixels de la première matrice afin de produire une deuxième matrice de m x n valeurs de composantes de pixels, qui définissent une image de résolution inférieure en comparaison des valeurs de composantes de pixels de la première matrice;
- des moyens pour sous-échantillonner ladite deuxième matrice de valeurs de composantes de pixels afin de produire une quatrième matrice de m/a x n/b valeurs de composantes de pixels de densité réduite, où a et b sont des facteurs de m et n, respectivement;
- des moyens pour coder ladite quatrième matrice de valeurs de composantes de pixels avec compression de données en un deuxième jeu de données numériques à stocker sur un support de données;
- des moyens complémentaires aux moyens de codage pour décoder le deuxième jeu de données numériques afin de reconstituer la quatrième matrice de valeurs de composantes de pixels;
- des moyens pour filtrer par interpolation ladite quatrième matrice reconstituée de valeurs de composantes de pixels afin de restituer ladite deuxième matrice de valeurs de composantes de pixels;
- des moyens pour soustraire la deuxième matrice restituée de la première matrice, pixel par pixel, afin de produire une troisième matrice de m x n valeurs de différence, et
- des moyens pour coder ladite troisième matrice de valeurs de différence en un premier jeu de données numériques à stocker sur un support de données.

7. Agencement de codage selon la revendication 6, dans lequel lesdits moyens de filtrage passe-bas et lesdits moyens de sous-échantillonnage effectuent un filtrage selon un facteur de deux, à la fois horizontalement et verticalement.

8. Agencement de codage selon la revendication 6 ou 7, dans lequel les moyens de codage de ladite matrice de valeurs de différence quantifient ces valeurs de différence en un plus petit nombre de valeurs quantifiées, y compris zéro, et codent les valeurs quantifiées en utilisant un code de longueur de passage.

9. Agencement de codage selon la revendication 6, 7 ou 8, dans lequel les moyens de codage des valeurs de composantes de pixels de la quatrième matrice effectuent un codage delta de ces valeurs de composantes de pixels.

10. Agencement de codage selon l'une quelconque des revendications 6 à 9, comprenant un support de données sur lequel lesdits premier et deuxième jeux de données numériques sont enregistrés.

11. Agencement de codage selon la revendication 10, dans lequel ledit support de données est un support d'enregistrement optique et un dispositif de lecture optique associé.

12. Support d'enregistrement optique susceptible d'être utilisé dans un agencement selon la revendication 11, sur lequel sont stockés lesdits premier et deuxième jeux de données numériques.

13. Procédé de codage selon l'une quelconque des revendications 1 à 5, susceptible d'être utilisé avec un codage YUV, dans lequel Y est la composante de luminance d'un pixel et U et V sont les deux composantes de chrominance, ces trois valeurs de composantes de pixels étant disponibles sous la forme de ladite information d'image dans les premières matrices respectives et étant codées séparément.

14. Procédé selon la revendication 13, dans lequel la première matrice de chacune des deux valeurs de composantes de chrominance a la moitié de la résolution horizontale de la première matrice pour la valeur de composante de luminance.

15. Procédé de codage selon l'une quelconque des revendications 1 à 5, susceptible d'être utilisé avec un codage YUV, où Y est la composante de luminance d'un pixel et U et V sont les deux composantes de chrominance, dans lequel seule la valeur de composante de luminance est ladite information d'image et est codée, les deux valeurs de composantes de chrominance étant disponibles directement pour être stockées sur le support de données.

16. Agencement de codage selon l'une quelconque des revendications 6 à 11, susceptible d'être utilisé avec un codage YUV, où Y est la composante de luminance d'un pixel et U et V sont les deux composantes de chrominance, dans lequel toutes ces valeurs de composantes de pixels sont codées séparément en commençant par les premières matrices respectives.

17. Agencement du codage selon la revendication 16, dans lequel la première matrice de chacune des valeurs de composantes de chrominance a la moitié de la résolution horizontale de la première matrice pour la valeur de la composante de luminance.

18. Agencement de codage selon l'une quelconque des revendications 6 à 11, susceptible d'être utilisé avec un codage YUV, où Y est la composante de luminance d'un pixel et U et V sont les deux composantes de chrominance, dans lequel seule la valeur de composante de luminance est ladite information d'image et est codée, les deux valeurs de composantes de chrominance étant disponibles directement pour être stockées sur le support de données.

19. Appareil d'affichage de données comprenant :
- un dispositif d'affichage pour afficher des images composées de pixels discrets qui sont chacun représentés par un code numérique respectif qui définit un pixel en terme de valeurs de composantes de pixels de chrominance et de luminance;
- une mémoire d'affichage ayant une capacité permettant de stocker les codes numériques pour une image à afficher;
- un générateur d'affichage pour produire des signaux vidéo à partir des codes numériques dans la mémoire d'affichage afin de commander le dispositif d'affichage;
- un dispositif de mémorisation de masse, et
- des moyens logiques pour le transfert sélectif des données numériques dudit dispositif de mémorisation de masse à la mémoire d'affichage,
caractérisé en ce que les données numériques stockées dans le dispositif de mémorisation de masse sont codées par le procédé de la revendication 1, et l'appareil comprend des moyens de décodage pour décoder un premier et un deuxième jeux de données numériques extraites du dispositif de mémorisation de masse par rapport à une image à afficher, en lesdits codes numériques à stocker dans ladite mémoire d'affichage.

20. Appareil d'affichage de données selon la revendication 19, caractérisé en ce que le codage desdites données numériques stockées dans ledit dispositif de mémorisation de masse a la caractéristique des revendications 3, 4, 5, 13, 14 ou 15.

21. Appareil d'affichage de données selon la revendication 19 ou 20, caractérisé en ce que ledit dispositif de mémorisation de masse est un support d'enregistrement optique et un dispositif de lecture optique associé.
